# FASCICULE DE BREVET EUROPEEN

(11) **EP 1 576 709 B1**
(45) Date de publication et mention de la délivrance du brevet: **01.06.2016**
(21) Numéro de dépôt: 03814502.5
(22) Date de dépôt: 26.12.2003
(51) Int. Cl.: H02H 7/085

(54) **CIRCUIT DE COMMANDE ELECTRONIQUE ET PROCEDE DE SURVEILLANCE DU FONCTIONNEMENT DE TRIACS**
ELEKTRONISCHE STEUERSCHALTUNG UND TRIAC-BETRIEBSÜBERWACHUNGSVERFAHREN
ELECTRONIC CONTROL CIRCUIT AND TRIAC OPERATION-MONITORING METHOD

(30) Priorité: 27.12.2002 FR 0216777
(43) Date de publication de la demande: 21.09.2005
(73) Titulaire: Groupe Brandt, 92500 Rueil-Malmaison (FR)
(72) Inventeur: OUDART, Pascal, F-45240 La Ferte Saint Aubin (FR)
(74) Mandataire: Santarelli
(86) Numéro de dépôt international: PCT/FR2003/003918
(87) Numéro de publication internationale: WO 2004/062057

(56) Documents cités:
- DE-A- 3 224 366

## Description

La présente invention concerne un circuit de commande électronique comportant au moins un triac.

Elle concerne également un procédé de surveillance du fonctionnement de triac dans un tel circuit de commande.

De manière générale, la présente invention concerne un circuit de commande électronique intégré dans un appareil électroménager, et par un exemple dans un four de cuisson domestique, adapté à piloter, au moyen de triacs, des éléments qui ne supportent pas de composante continue dans leur alimentation.

Il peut s'agir en particulier d'un moteur asynchrone alimenté en courant alternatif.

En effet, l'apparition d'une composante continue dans ce type de moteur peut provoquer la destruction de ce moteur par effet Joule.

Afin d'éviter la destruction de ces moteurs, il est connu d'intégrer une sécurité thermique dans le corps même du moteur, afin d'assurer la coupure de l'alimentation de ce moteur en cas de surchauffe, notamment lors de la présence d'une composante continue non nulle du courant d'alimentation de ce moteur.

Un tel élément de sécurité thermique présente cependant un coût non négligeable, notamment lorsque plusieurs moteurs doivent être ainsi protégés dans un même appareil électroménager.

On connaît également des solutions dans lesquelles les éléments motorisés sont alimentés par le biais de relais, plus coûteux qu'un triac, mais n'étant pas susceptibles de générer une composante continue.

En effet, ces relais ne peuvent se comporter en redresseur de courant, contrairement aux triacs dans lesquels le défaut d'amorçage du triac sur l'une ou l'autre de l'alternance du courant alternatif a pour effet de faire apparaître une tension continue non nulle aux bornes du moteur.

La présente invention a pour but de résoudre les inconvénients précités et de proposer une solution permettant de protéger efficacement des éléments électriques sensibles à la présence d'une composante continue et pilotés par un triac, à moindre coût.

A cet effet, la présente invention vise un circuit de commande électronique comportant au moins un triac.

Selon l'invention, une résistance est placée en série avec ce triac et des moyens formant filtre passe-bas sont adaptés à mesurer la composante continue du courant circulant dans cette résistance.

L'utilisation de moyens formant filtre passe-bas adaptés à mesurer la composante continue du courant circulant dans cette résistance, permet de connaître la valeur (nulle, négative ou positive) de la tension continue aux bornes de cette résistance.

Ainsi, tant que le triac fonctionne correctement, cette composante continue est nulle. A contrario, dès lors que le triac est défaillant, et que par exemple ce triac n'est pas amorcé sur une alternance de courant alternatif pilotant ce triac, une composante continue positive ou négative apparaît en sortie de ces moyens formant filtre passe-bas.

Ainsi, la valeur en sortie du filtre est directement significative de l'apparition d'un défaut dans un triac du circuit de commande électronique.

Selon une caractéristique préférée de l'invention, ces moyens formant filtre passe-bas ont une fréquence de coupure très faible par rapport à la fréquence du courant alternatif d'alimentation du circuit de commande électronique.

Cette caractéristique du filtre permet d'obtenir en sortie de ce filtre une moyenne dans le temps de la tension présente aux bornes de la résistance.

Selon une caractéristique préférée de l'invention, la valeur de la composante continue mesurée par les moyens formant filtre passe-bas est adressée à des moyens de surveillance adaptés à corriger un mode de défaillance d'un triac lorsque ladite composante continue est non nulle.

Selon une autre caractéristique de l'invention, le circuit de commande électronique comporte au moins deux triacs, les triacs ayant un potentiel de référence commun et la résistance étant placée en série avec le potentiel de référence commun.

Dès lors que l'ensemble des triacs du circuit de commande électronique présente un potentiel de référence commun, les courants qui transitent au travers de ces différents triacs circulent également dans ce potentiel de référence commun. Grâce à l'insertion d'une résistance au niveau de ce potentiel de référence commun, il est possible d'obtenir une image en tension des courants parcourant les différents triacs.

Selon un autre aspect, l'invention concerne également un procédé de surveillance du fonctionnement des triacs dans un circuit de commande électronique comportant au moins un triac.

Ce procédé comprend les étapes suivantes :
- détection d'une composante continue non nulle du courant circulant dans une résistance placée en série avec ledit triac ; et
- extinction du triac du circuit de commande.

Ce procédé de surveillance permet de détecter à moindre coût l'apparition d'une composante continue de courant aux bornes d'un élément électrique ne supportant pas de composante continue.

L'extinction du triac permet d'annuler un des modes de défaillance possibles des triacs, à savoir lorsqu'un défaut d'amorçage du triac est observé lors de la sollicitation de ce triac.

Selon une caractéristique préférée de l'invention, le procédé de surveillance comprend en outre les étapes suivantes :
- détection d'une composante continue non nulle du courant circulant dans la résistance lorsque le triac est éteint ; et
- allumage en permanence du triac.

Ainsi, lorsque le mode de défaillance est détecté en l'absence de sollicitation dudit triac, un allumage permanent de ce triac est imposé.

Ce procédé de surveillance permet ainsi de remédier à un second mode de défaillance possible des triacs, c'est-à-dire un défaut d'amorçage du triac observé en absence de sollicitation.

Ce procédé de surveillance d'un circuit de commande électronique conforme à l'invention est particulièrement bien adapté à un four de cuisson électrique.

D'autres particularités et avantages de l'invention apparaîtront encore dans la description ci-après.

Aux dessins annexés, donnés à titre d'exemples non limitatifs :
- la figure 1 est un schéma simplifié d'un circuit de commande électronique conforme à un mode de réalisation de l'invention ;
- la figure 2 est un schéma d'un filtre passe-bas adapté à être incorporé au circuit de commande électronique de la figure 1 ; et
- la figure 3 est un algorithme du procédé de surveillance du fonctionnement des triacs dans un circuit de commande électronique tel qu'illustré à la figure 1.

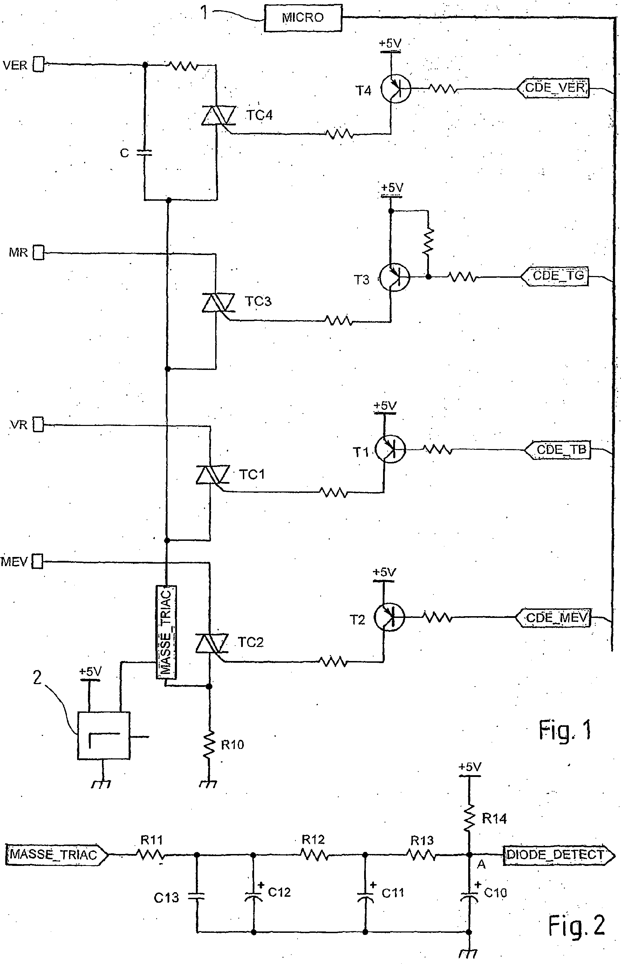

On va décrire tout d'abord en référence à la figure 1, un circuit de commande électronique.

Il s'agit ici, à titre non limitatif, d'un circuit de commande d'un appareil électroménager, du type un four de cuisson domestique, comprenant plusieurs éléments motorisés.

A titre d'exemple, un premier moteur VR permet de commander la rotation d'un tourne-broche.

Un second moteur, noté MEV, permet en outre dans un tel four de commander le fonctionnement d'un ventilateur permettant de brasser l'air dans la cavité du four de cuisson.

Un troisième moteur MR est également adapté à entraîner en rotation un ventilateur de refroidissement placé sur la partie supérieure du four et destiné à favoriser le refroidissement du four, et notamment de la carte électronique nécessaire au fonctionnement du four.

Le circuit de commande électronique peut également être adapté à commander le fonctionnement d'un vérin à cire VER permettant par exemple d'obtenir le verrouillage de la porte du four, notamment lors des cycles de pyrolyse à très haute température.

Les moteurs VR, MEV et MR utilisés dans ce type d'application sont des moteurs asynchrones alimentés en courant alternatif.

Ces moteurs VR, MEV et MR sont sensibles à la présence d'une composante continue dans leur alimentation, risquant de provoquer par échauffement la destruction du moteur.

Ces éléments motorisés VR, MEV, MR et le vérin à cire VER sont pilotés respectivement par des moyens de commande CDE_TB, CDE_MEV, CDE_TG et CDE_VER.

Le contrôle et la commande de ces éléments motorisés sont réalisés de manière classique par un ensemble de moyens logiciels intégrés dans un micro-contrôleur 1 associé à une carte électronique regroupant les différents éléments du circuit d'alimentation.

L'alimentation de ces différents éléments VR, MEV, MR, VER, est réalisée au moyen de triacs, notés respectivement TC1, TC2, TC3 et TC4.

En pratique, ces triacs TC1, TC2, TC3 et TC4 et les différents éléments de leur alimentation sont montés sur une même carte électronique:
Bien entendu, le nombre de triacs et d'éléments motorisés pilotés par un triac peut être variable.

On va décrire pour un des éléments motorisés, par exemple le moteur du tourne-broche VR, le circuit de commande et d'alimentation d'un tel moteur, les circuits de commande des éléments pilotés par les triacs TC1, TC2, TC3 et TC4 étant sensiblement identiques.

L'impulsion de commande adressée par le micro-contrôleur 1 est délivrée à un transistor T1, par l'intermédiaire d'une résistance.

La tension présente aux bornes de ce transistor permet de délivrer une impulsion de courant au niveau de la gâchette du triac TC1 afin d'amorcer le fonctionnement de ce triac TC1.

De manière connue, ce triac TC1 fonctionne comme un double thyristor, l'amorçage du triac TC1 étant réalisé à chaque alternance du courant alternatif.

Un des défauts du fonctionnement de ce type de triac apparaît lorsque l'amorçage du triac n'est pas obtenu sur une des alternances du courant, c'est-à-dire que le triac se comporte comme une diode. Ce mode de défaillance du triac est appelé mode Diode.

En pratique, suivant l'alternance sur laquelle se produit le défaut d'amorçage, une tension continue strictement positive ou strictement négative apparaît aux bornes du triac.

En outre, ce mode Diode peut apparaître soit lorsque le triac est sollicité par une impulsion de commande appliquée à sa gâchette, soit au contraire en absence d'une telle sollicitation.

Afin d'injecter le courant de commande dans la gâchette de chacun de ces triacs, ces triacs ont un potentiel de référence commun appelé MASSE__TRIAC sur la figure 1.

Ici, l'ensemble des courants qui transitent dans les différents triacs TC1, TC2, TC3 et TC4 circulent tous dans cette ligne de potentiel de référence commun.

Une résistance R10 est placée en série sur ce potentiel de référence commun.

Ainsi, cette résistance supplémentaire R10 est montée sur la masse des triacs.

Cette résistance possède une très faible valeur afin de ne pas perturber le circuit de commande électronique, par exemple de l'ordre de 1 Ω.

En particulier, cette valeur doit être adaptée à la sensibilité des moyens de mesure intégrés dans le micro-contrôleur 1.

Grâce à cette résistance placée en série sur la masse des triacs, il est possible d'obtenir, en mesurant la tension à ses bornes, la valeur des courants parcourant les différents triacs TC1, TC2, TC3 et TC4.

Afin de mesurer la composante continue du courant circulant dans la résistance R10, des moyens formant filtre passe-bas 2, illustrés à la figure 2, sont montés également sur la masse commune des triacs.

Ce filtre passe-bas permet ainsi de filtrer la tension présente aux bornes de la résistance supplémentaire R10.

Les valeurs et le montage des résistances R11, R12, R13, R14 et des condensateurs C10, C11, C12 et C13 sont tels que les moyens formant filtre passe-bas ont une fréquence de coupure très faible par rapport à la fréquence du courant alternatif d'alimentation du circuit de commande électronique.

Ainsi, en ayant une fréquence de l'ordre de 0,5 Hz, très faible par rapport à la fréquence de 50 Hz du courant alternatif du secteur, il est possible d'avoir une constante de temps très grande permettant d'obtenir la moyenne dans le temps de la tension présente aux bornes de la résistance R10.

Compte tenu des valeurs des résistances R14 d'une part et R10, R11, R12 et R13 d'autres part, il est possible au point de détection A du filtre passe-bas de la figure 2 d'obtenir, en fonctionnement normal du circuit une tension égale à la moitié de la tension nominale de 5V, c'est-à-dire sensiblement égale à 2,5V.

Lorqu'une composante continue non nulle est présente dans le courant d'alimentation des différents triacs et donc dans la résistance supplémentaire R10, la valeur de la tension au point A, en sortie du filtre passe-bas 2, sera modifiée autour de cette valeur de 2,5V.

Comme expliqué précédemment, en fonction de l'alternance sur laquelle le triac n'est pas amorcé, cette tension continue peut être positive ou négative, de telle sorte que la tension détectée au point A en sortie du filtre passe-bas 2, peut être supérieure ou inférieure à la tension courante de 2,5V.

L'analyse de cette valeur de la tension au point A permet ainsi de détecter la présence d'un défaut d'amorçage dans l'un des triacs du système du circuit de commande électronique.

En pratique, la détection d'un tel défaut peut être réalisée lorsque la différence entre la tension mesurée au point A du circuit et la valeur courante de 2,5V est supérieure à une valeur de seuil.

Cette valeur de seuil est réglée en fonction de la valeur de la composante continue supportable par le moteur le plus sensible du four.

La valeur de cette composante continue mesurée par les moyens formant filtre passe-bas 2 est adressée à des moyens de surveillance intégrés au micro-contrôleur 1. Ces moyens de surveillance sont adaptés à corriger le mode de défaillance d'un triac dès lors que la composante continue mesurée au niveau de la résistance supplémentaire R10 est non nulle.

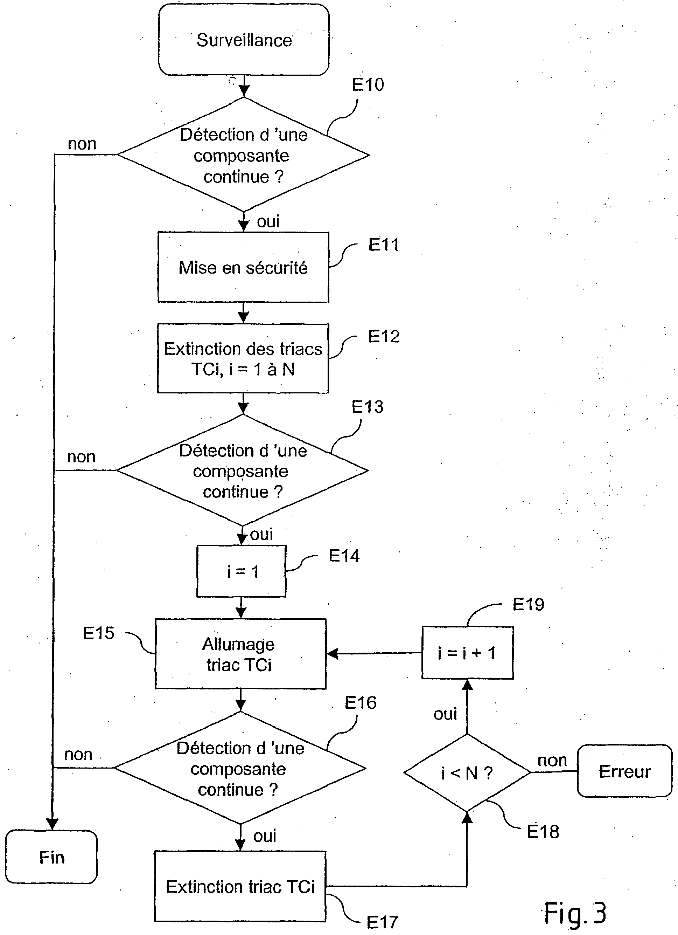

Le fonctionnement de ces moyens de surveillance sera décrit ci-après en référence à la figure 3.

De manière générale, ces moyens de surveillance sont adaptés à allumer en permanence le triac défaillant lorsque la composante continue est non nulle en l'absence de sollicitation du triac, et à éteindre en permanence ce triac défaillant lorsque la composante continue est non nulle lors d'une sollicitation du triac.

Le procédé de surveillance du fonctionnement des triacs tel qu'illustré à la figure 3 permet ainsi de remédier à ces deux types de défaut, quel que soit le triac concerné dans le circuit de commande.

En pratique, une étape de test E10 est mise en oeuvre de manière récurrente afin de détecter la présence d'une composante continue non nulle aux bornes de la résistance supplémentaire R10.

Comme expliqué précédemment, en pratique, on mesure la tension au point A en sortie du filtre passe-bas illustré à la figure 2 et la composante continue non nulle est détectée lorsque la valeur de cette tension est supérieure ou inférieure à la valeur normale de 2,5V, au-delà d'une valeur de seuil prédéterminée.

Lorsqu'une telle composante continue est détectée, une mise en sécurité E11 de l'ensemble des éléments du four est réalisée afin de bloquer le fonctionnement total de ce four.

Une étape d'extinction E12 est ensuite mise en oeuvre afin d'éteindre l'ensemble des triacs TC1, TC2, TC3 et TC4 du circuit de commande électronique.

Ici, l'ensemble des triacs TCi avec i compris entre 1 et 4 sont éteints.

Après l'extinction de ces triacs, on vérifie dans une seconde étape de détection E13 si une composante continue est toujours présente aux bornes de la résistance supplémentaire R10. Cette détection est mise en oeuvre à partir de la valeur de la tension mesurée au point A comme expliqué précédemment.

Dans la négative, le procédé de surveillance prend fin. Dans ce cas, le défaut d'amorçage d'un des triacs a ainsi été annulé par l'extinction de l'ensemble des triacs. Cela signifie, en pratique, que le défaut d'amorçage de l'un des triacs était observé lors de l'allumage de l'un de ces triacs.

En revanche, si à l'étape de détection E13, une composante continue est toujours présente aux bornes de la résistance supplémentaire R10, cela signifie que l'un des triacs TCi est en court-circuit, de telle sorte que le défaut d'amorçage est observé alors que ce triac est éteint et non sollicité.

Afin d'identifier le triac défaillant et de remédier à ce défaut, on procède à l'allumage séquentiel des différents triacs TCi, avec i compris ici entre 1 et 4.

En pratique, on initialise dans une étape d'initialisation E14 l'indice i a la valeur 1. Une étape d'allumage E15 est ensuite mise en oeuvre afin d'allumer ce premier triac TCi, ici TC1.

Une troisième étape de détection E16 est mise en oeuvre afin de mesurer la composante continue aux bornes de la résistance supplémentaire R10.

Si cette composante continue est nulle, le procédé de surveillance prend fin.

En pratique, le triac défaillant ainsi identifié est maintenu allumé en permanence afin de remédier au défaut d'amorçage observé lorsque ce triac est éteint.

Si à l'issue de la troisième étape de détection E16, la composante continue détectée est non nulle, les moyens de surveillance considèrent que le triac courant TCi n'est pas défaillant et une étape d'extinction E17 permet d'éteindre de nouveau ce triac TCi.

On vérifie dans une étape de test E18 que l'indice i est strictement inférieur à N. Dans la négative, un message d'erreur peut être adressé par le système, dès lors qu'aucun triac défaillant n'aurait été identifié.

Sinon, une étape d'incrémentation E19 est mise en oeuvre pour considérer l'indice suivant i+1 et l'ensemble des étapes E15 suivantes sont réitérées pour le triac suivant TCᵢ₊₁.

On procède ainsi à l'allumage séquentiel de l'ensemble des triacs TCi et on sélectionne le triac défaillant lorsque aucune composante continue non nulle du courant circulant dans la résistance R10 est détectée lorsque ce triac est allumé.

Le maintien de l'allumage permanent de ce triac permet de remédier ainsi au mode Diode présent aux bornes de ce triac lorsque celui-ci n'est pas sollicité.

Le procédé de surveillance permet ainsi, par le simple ajout d'une résistance R10 et de moyens de filtrage 2 en sortie de cette résistance R10, de détecter et de remédier à l'apparition d'un défaut dans l'un des triacs du circuit de commande électronique, afin de protéger efficacement les éléments motorisés pilotés par ces triacs.

Ce procédé de surveillance permet ainsi d'éviter d'utiliser un élément de sécurité thermique associé à chacun des éléments motorisés du circuit.

La présente invention est particulièrement bien adaptée à l'exemple de réalisation décrit précédemment concernant un four de cuisson domestique.

Elle peut évidemment s'appliquer à tout type de dispositif commandé par le biais de triacs et nécessitant une protection des différents éléments motorisés.

Elle pourra en particulier s'appliquer à une hotte domestique, dans la commande du ventilateur d'aspiration des fumées.

Bien entendu, de nombreuses modifications peuvent être apportées à l'exemple de réalisation décrit ci-dessus sans sortir du cadre de l'invention.

Ainsi, bien que dans procédé de surveillance, tous les triacs TC1, TC2, TC3 et TC4 sont pilotés par les moyens de surveillance, seuls les triacs TC1, TC2, TC3 commandant le fonctionnement d'un élément motorisé sensible à une composante continue de l'alimentation électrique pourraient être surveillés.

En outre, le circuit de commande électrique conforme à l'invention pourrait ne comporter qu'un seul triac pilotant un élément motorisé.

Par ailleurs, l'invention n'est pas limitée à la commande de moteurs, mais s'applique également à la commande électrique du fonctionnement de transformateurs ou d'électrovannes, et plus généralement à tout élément électrique ne supportant pas de composante continue dans son alimentation.

## Revendications

1. Circuit de commande électronique comportant au moins un triac (TC1, TC2, TC3), **caractérisé en ce qu'**une résistance (R10) est placée en série avec ledit triac (TC1, TC2, TC3) et des moyens formant filtre passe-bas (2) sont adaptés à mesurer la composante continue du courant circulant dans ladite résistance (R10).

2. Circuit de commande électronique conforme à la revendication 1, **caractérisé en ce que** les moyens formant filtre passe-bas (2) ont une fréquence de coupure très faible par rapport à la fréquence du courant alternatif d'alimentation du circuit de commande électronique.

3. Circuit de commande électronique conforme à l'une des revendications 1 ou 2, **caractérisé en ce que** la valeur de la composante continue mesurée par les moyens formant filtre passe-bas (2) est adressée à des moyens de surveillance (1) adaptés à corriger un mode de défaillance d'un triac (TC1, TC2, TC3, TC4) lorsque ladite composante continue est non nulle.

4. Circuit de commande électronique conforme à la revendication 3, **caractérisé en ce que** les moyens de surveillance (1) sont adaptés à allumer en permanence ledit triac défaillant lorsque la composante continue est non nulle en l'absence de sollicitation dudit triac, et à éteindre en permanence ledit triac défaillant lorsque la composante continue est non nulle lors d'une sollicitation dudit triac.

5. Circuit de commande électronique conforme à l'une des revendications 1 à 4, **caractérisé en ce qu'**il comporte au moins deux triacs (TC1, TC2, TC3), les triacs ayant un potentiel de référence commun et ladite résistance (R10) étant placée en série avec le potentiel de référence commun.

6. Procédé de surveillance du fonctionnement des triacs dans un circuit de commande électronique comportant au moins un triac (TC1, TC2, TC3), **caractérisé en ce qu'**il comprend les étapes suivantes :
- détection (E10) d'une composante continue non nulle du courant circulant dans une résistance placée en série avec ledit triac (TC1, TC2, TC3) ; et
- extinction (E12) dudit triac (TC1, TC2, TC3) du circuit de commande.

7. Procédé de surveillance conforme à la revendication 6, **caractérisé en ce qu'**il comprend en outre les étapes suivantes :
- détection (E13) d'une composante continue non nulle du courant circulant dans ladite résistance lorsque ledit triac est éteint ; et
- allumage (E15) en permanence dudit triac.

8. Procédé de surveillance conforme à l'une des revendications 6 ou 7, le circuit de commande électronique comportant au moins deux triacs (TC1, TC2, TC3, TC4), **caractérisé en ce qu'**il comprend les étapes suivantes :
- détection (E10) d'une composante continue non nulle du courant circulant dans une résistance placée en série avec un potentiel de référence commun auxdits triacs (TC1, TC2, TC3, TC4) ; et
- extinction (E12) desdits triacs (TC1, TC2, TC3, TC4) du circuit de commande.

9. Procédé de surveillance conforme à la revendication 8, **caractérisé en ce qu'**il comprend en outre les étapes suivantes :
- détection (E13) d'une composante continue non nulle du courant circulant dans ladite résistance lorsque lesdits triacs sont éteints ;
- identification (E15, E16) d'un triac défaillant parmi lesdits triacs ; et
- allumage (E15) en permanence dudit triac identifié.

10. Procédé de surveillance conforme à la revendication 9, **caractérisé en ce que** l'étape d'identification d'un triac défaillant comprend les sous-étapes suivantes :
- allumage (E15) séquentiellement desdits triacs ; et
- sélection (E16) dudit triac défaillant lorsque aucune composante continue non nulle du courant circulant dans ladite résistance (R10) est détectée lorsque ledit triac défaillant est allumé.

11. Four de cuisson domestique comprenant un circuit de commande électronique comportant au moins un triac (TC1, TC2, TC3) adapté à commander un élément motorisé (VR, MEV, MR) dudit four de cuisson, **caractérisé en ce qu'**il comprend un circuit de commande conforme à l'une des revendications 1 à 5 associé à des moyens de surveillance (1) adaptés à mettre en oeuvre le procédé de surveillance conforme à l'une des revendications 6 à 10.

## Patentansprüche

1. Elektronische Steuerschaltung mit mindestens einem Triac (TC1, TC2, TC3), **dadurch gekennzeichnet, dass** ein Widerstand (R10) mit dem Triac (TC1, TC2, TC3) in Reihe geschaltet ist und ein Tiefpassfilter (2) bildende Mittel dazu geeignet sind, die Gleichstromkomponente des im Widerstand (R10) fließenden Stroms zu messen.

2. Elektronische Steuerschaltung nach Anspruch 1, **dadurch gekennzeichnet, dass** die ein Tiefpassfilter (2) bildenden Mittel bezogen auf die Frequenz des Wechselstroms zur Speisung der elektronischen Steuerschaltung eine sehr niedrige Grenzfrequenz haben.

3. Elektronische Steuerschaltung nach einem der Ansprüche 1 oder 2, **dadurch gekennzeichnet, dass** der Wert der Gleichstromkomponente, der von den ein Tiefpassfilter (2) bildenden Mitteln gemessen wird, zu Überwachungsmitteln (1) geleitet wird, die dazu geeignet sind, eine Ausfallart eines Triacs (TC1, TC2, TC3, TC4) zu korrigieren, wenn die Gleichstromkomponente ungleich null ist.

4. Elektronische Steuerschaltung nach Anspruch 3, **dadurch gekennzeichnet, dass** die Überwachungsmittel (1) dazu geeignet sind, den defekten Triac permanent einzuschalten, wenn bei fehlender Beanspruchung des Triacs die Gleichstromkomponente ungleich null ist, und den defekten Triac permanent auszuschalten, wenn bei einer Beanspruchung des Triacs die Gleichstromkomponente ungleich null ist.

5. Elektronische Steuerschaltung nach einem der Ansprüche 1 bis 4, **dadurch gekennzeichnet, dass** sie mindestens zwei Triacs (TC1, TC2, TC3) aufweist, wobei die Triacs ein gemeinsames Bezugspotential haben und der Widerstand (R10) mit dem gemeinsamen Bezugspotential in Reihe geschaltet ist.

6. Verfahren zur Überwachung des Betriebs der Triacs in einer elektronischen Steuerschaltung mit mindestens einem Triac (TC1, TC2, TC3), **dadurch gekennzeichnet, dass** es folgende Schritte umfasst:
- Erfassen (E10) einer von null verschiedenen Gleichstromkomponente des Stroms, der in einem mit dem Triac (TC1, TC2, TC3) in Reihe geschalteten Widerstand fließt, und
- Ausschalten (E12) des Triacs (TC1, TC2, TC3) der Steuerschaltung.

7. Überwachungsverfahren nach Anspruch 6, **dadurch gekennzeichnet, dass** es ferner folgende Schritte umfasst:
- Erfassen (E13) einer von null verschiedenen Gleichstromkomponente des im Widerstand fließenden Stroms, wenn der Triac ausgeschaltet ist, und
- permanentes Einschalten (E15) des Triacs.

8. Überwachungsverfahren nach einem der Ansprüche 6 oder 7, wobei die elektronische Steuerschaltung mindestens zwei Triacs (TC1, TC2, TC3, TC4) aufweist, **dadurch gekennzeichnet, dass** das Verfahren folgende Schritte umfasst:
- Erfassen (E10) einer von null verschiedenen Gleichstromkomponente des Stroms, der in einem Widerstand fließt, der mit einem den Triacs (TC1, TC2, TC3, TC4) gemeinsamen Bezugspotential in Reihe geschaltet ist, und
- Ausschalten (E12) der Triacs (TC1, TC2, TC3, TC4) der Steuerschaltung.

9. Überwachungsverfahren nach Anspruch 8, **dadurch gekennzeichnet, dass** es ferner folgende Schritte umfasst:
- Erfassen (E13) einer von null verschiedenen Gleichstromkomponente des im Widerstand fließenden Stroms, wenn die Triacs ausgeschaltet sind,
- Identifizieren (E15, E16) eines defekten Triacs aus den Triacs und
- permanentes Einschalten (E15) des identifizierten Triacs.

10. Überwachungsverfahren nach Anspruch 9, **dadurch gekennzeichnet, dass** der Schritt zum Identifizieren eines defekten Triacs folgende Unterschritte umfasst:
- sequentielles Einschalten (E15) der Triacs und
- Auswählen (E16) des defekten Triacs, wenn keinerlei von null verschiedene Gleichstromkomponente des im Widerstand (R10) fließenden Stroms erfasst wird, wenn der defekte Triac eingeschaltet ist.

11. Haushaltsbackofen mit einer elektronischen Steuerschaltung mit mindestens einem Triac (TC1, TC2, TC3), der zur Steuerung eines motorisch angetriebenen Elements (VR, MEV, MR) des Backofens geeignet ist, **dadurch gekennzeichnet, dass** er eine Steuerschaltung nach einem der Ansprüche 1 bis 5 aufweist, die Überwachungsmitteln (1) zugeordnet ist, welche dazu geeignet sind, das Überwachungsverfahren nach einem der Ansprüche 6 bis 10 auszuführen.

## Claims

1. Electronic control circuit comprising at least one triac (TC1, TC2, TC3), **characterized in that** a resistor (R10) is placed in series with said triac (TC1, TC2, TC3) and low-pass filter forming means (2) are adapted to measure the direct current component of the current passing through said resistor (R10).

2. An electronic control circuit according to claim 1, **characterized in that** the low-pass filter forming means (2) have a very low cut-off frequency relative to the frequency of the alternating current supply of the electronic control circuit.

3. An electronic control circuit according to one of claims 1 or 2, **characterized in that** the value of the direct current component measured by the low-pass filter forming means (2) is sent to monitoring means (1) adapted to correct a defective mode of a triac (TC1, TC2, TC3, TC4) when said direct current component is non-zero.

4. An electronic control circuit according to claim 3, **characterized in that** the monitoring means (1) are adapted to continuously turn on said defective triac when the direct current component is non-zero in the absence of seeking actuation of the triac, and to continuously turn off said defective triac when the direct current component is non-zero on seeking actuation of said triac.

5. An electronic control circuit according to one of claims 1 to 4, **characterized in that** it comprises at least two triacs (TC1, TC2, TC3), the triacs having a common reference potential and said resistor (R10) being placed in series with the common reference potential.

6. A method of monitoring the operation of the triacs in an electronic control circuit comprising at least one triac (TC1, TC2, TC3), **characterized in that** it comprises the following steps:
- detecting (E10) a non-zero direct current component of the current passing in a resistor placed in series with said triac (TC1, TC2, TC3); and
- turning off (E12) said triac (TC1, TC2, TC3) of the control circuit.

7. A monitoring method according to claim 6, **characterized in that** it further comprises the following steps:
- detecting (E13) a non-zero direct current component of the current passing in said resistor when said triac is off, and
- continuously turning on (E15) said triac.

8. Monitoring method in accordance with one of claims 6 or 7, the electronic control circuit comprising at least two triacs (TC1, TC2, TC3, TC4), **characterized in that** it comprises the following steps:
- detecting (E10) a non-zero direct current component of the current passing in a resistor placed in series with a reference potential common to said triacs (TC1, TC2, TC3, TC4); and
- turning off (E12) said triacs (TC1, TC2, TC3, TC4) of the control circuit.

9. A monitoring method according to claim 8, **characterized in that** it further comprises the following steps:
- detecting (E13) a non-zero direct current component of the current passing in said resistor when said triacs are off,
- identifying (E15, E 16) a defective triac among said triacs;
- continuously turning on (E15) said identified triac.

10. A monitoring method according to claim 9, **characterized in that** the step of identifying a defective triac comprises the following sub-steps:
- sequentially turning on (E15) said triacs; and
- selecting (E16) said defective triac when no non-zero direct current component of the current passing in said resistor (R10) is detected when said defective triac is turned on.

11. A domestic cooking oven comprising an electronic control circuit comprising at least one triac (TC1, TC2, TC3) adapted to control a motorized component (VR, MEV, MR) of said cooking oven, **characterized in that** it comprises a control circuit in accordance with one of claims 1 to 5 associated with monitoring means (1) adapted to implement the monitoring method in accordance with one of claims 6 to 10.
